# EUROPEAN PATENT SPECIFICATION

(11) **EP 3 779 967 B1**
(45) Date of publication and mention of the grant of the patent: **04.12.2024**
(21) Application number: 19191878.8
(22) Date of filing: 15.08.2019
(51) Int. Cl.: G10L 15/22, G10L 17/00, G10L 17/10, G10L 17/26

(54) **AUDIO OUTPUT WITH EMBEDDED AUTHENTIFICATION**
AUDIOAUSGANG MIT EINGEBETTETER AUTHENTIFIZIERUNG
SORTIE AUDIO INCLUANT UNE AUTHENTIFICATION

(43) Date of publication of application: 17.02.2021
(73) Proprietor: Nokia Technologies Oy, 02610 Espoo (FI)
(72) Inventor: CRONIE, Harm Stefan, 1040 Echallens (CH)
(74) Representative: Whiting, Gary

(56) References cited:
- US-A1- 2006 074 651
- US-A1- 2019 179 594
- US-A1- 2019 206 396
- HUAN FENG ET AL: "Continuous Authentication for Voice Assistants", ARXIV.ORG, CORNELL UNIVERSITY LIBRARY, 201 OLIN LIBRARY CORNELL UNIVERSITY ITHACA, NY 14853, 17 January 2017 (2017-01-17), XP080749477, DOI: 10.1145/3117811.3117823
- MENG YAN ET AL: "Securing Consumer IoT in the Smart Home: Architecture, Challenges, and Countermeasures", TECHNICAL REPORT OF WIRELESS NETWORKING GROUP, COORDINATED SCIENCE LABORATORY; DEPT. ELECTRICAL AND COMPUTER ENGINEERING; UNIVERSITY OF ILLINOIS AT URBANA-CHAMPAIGN, US, vol. 25, no. 6, 1 December 2018 (2018-12-01), pages 53 - 59, XP011696076, ISSN: 1536-1284, [retrieved on 20190103], DOI: 10.1109/MWC.2017.1800100

## Description

### Field

The present specification relates to providing audio outputs; for example, for commands for user devices.

### Background

Devices may respond to voice commands to execute a wide variety of tasks. However, voice commands may be generated from a compromised device, which may be undesirable. There remains a need for further improvements in this field.

The document titled "Continuous Authentication for Voice Assistants" (by Huan Feng et al.;Arxiv.org, Cornell University Library, 201 Olin Library Cornell University Ithaca, NY 14853, 17 January 2017 (2017-01-17),XP080749477, DOI: 10.1145/3117811.3117823*)* teaches a system, VAuth, designed to fit in widely-adopted wearable devices, such as eyeglasses, earphones/buds and necklaces, where it collects the body-surface vibrations of the user and matches it with the speech signal received by the voice assistant's microphone.

VAuth allows the voice assistant to execute only the commands that originate from the voice of the owner.

### Summary

The scope of protection sought for various embodiments of the invention is set out by the independent claims. The embodiments and features, if any, described in the specification that do not fall under the scope of the independent claims are to be interpreted as examples useful for understanding various embodiments of the invention.

In a first aspect, this specification provides an apparatus according to claim 1 and an apparatus according to claim 10.

In some examples, the audio output comprises the embedded first score and at least part of the audio signal.

In some examples, the first score indicates that the authenticity of the audio signal is above a first threshold if the audio signal is determined to be received from a human and/or a presence of a human is determined by the means for determining the first score.

Some examples include means for determining a direction of arrival of the audio signal (for e.g. using one or more sensors such as an array of microphones, or the like); and means for determining whether there is presence of a human in the direction of arrival of the audio signal (for e.g. using one or more sensors such as radars, infrared sensors, temperature sensors, motion sensors, time-of-flight sensors, proximity sensors, or the like). The first score may indicate that the authenticity of the audio signal is above the first threshold if the presence of a human in the direction of arrival of the audio signal is determined.

Some examples include means for capturing one or more visual images. In some examples, the first score is determined based, at least in part, on the one or more visual images. Some examples further include means for determining a level of lip synchronization based on synchronization between the one or more visual images and the audio signal. The first score may indicate that the authenticity of the audio signal is above the first threshold if the level of lip synchronization is above a second threshold.

In some examples, the embedded first score is in an audible or an inaudible frequency range.

In some examples, the audio signal comprises one or more commands to be provided to one or more user devices.

Some examples include means for embedding a cryptographic signature in the audio output, wherein the cryptographic signature indicates an authenticity of the apparatus.

The means may comprise: at least one processor; and at least one memory including computer program code, the at least one memory and the computer program code configured, with the at least one processor, to cause the performance of the apparatus.

In a second aspect, this specification describes a method according to claim 13 and a method according to claim 14.

In a third aspect, this specification describes a computer program according to claim 15.

In a fourth aspect, this specification describes a system comprising a first detection device and a user device according to claim 12.

### Brief description of the drawings

Example embodiments will now be described, by way of example only, with reference to the following schematic drawings, in which:
FIGS. 1 and 2 are block diagrams of example systems;
FIGS. 3 and 4 are block diagrams of systems in accordance with example embodiments;
FIG. 5 is a flowchart showing an algorithm in accordance with an example embodiment;
FIG. 6 is a block diagram of a system in accordance with an example embodiment;
FIG. 7 is a flowchart showing an algorithm in accordance with an example embodiment;
FIG. 8 is an example illustration of an output of a system in accordance with an example embodiment;
FIGS. 9 to 11 are flowcharts showing algorithms in accordance with example embodiments;
FIGS. 12 to 14 are block diagrams of systems in accordance with example embodiments;
FIG. 15 is a sequence diagram illustrating an algorithm in accordance with an example embodiment;
FIG. 16 is a block diagram of components of a system in accordance with an example embodiment; and
FIGS. 17A and 17B show tangible media, respectively a removable non-volatile memory unit and a Compact Disc (CD) storing computer-readable code which when run by a computer perform operations according to example embodiments.

### Detailed description

In the description and drawings, like reference numerals refer to like elements throughout.

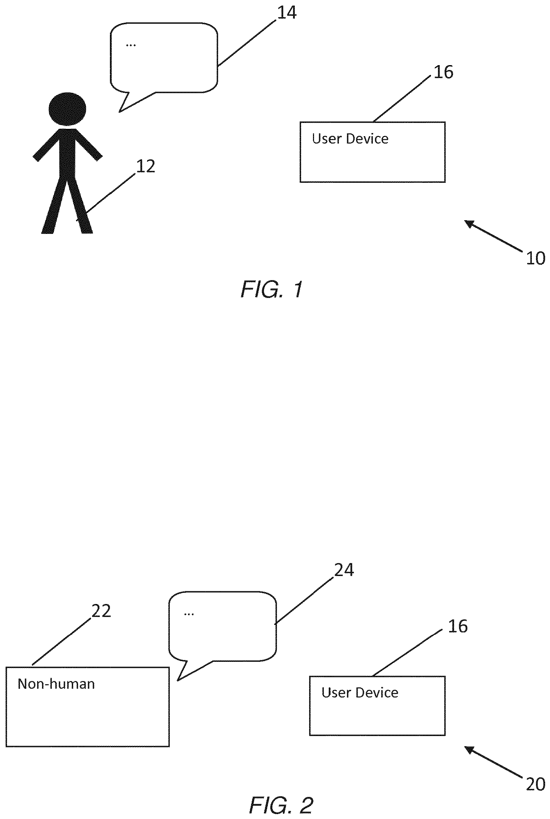

FIG. 1 is a block diagram of an example system, indicated generally by the reference numeral 10. A user 12 (e.g. a human user) may give a voice command 14 to a user device 16. The user device 16 may respond to voice commands by performing one or more actions based on the voice commands. For example, the user device 16 may be a refrigerator (for example, a smart fridge), that may be used for purchasing one or more items from online shops. As such, the user 12 may provide a voice command 14 to the user device 16 in order to command the user device 16 to perform an action of purchasing one or more items (e.g. groceries).

FIG. 2 is a block diagram of an example system, indicated generally by the reference numeral 20. A non-human device 22 may generate a voice command 24 which may cause the user device 16 to perform one or more actions. For example, a pre-recorded voice may be generated at the non-human device 22 for controlling the user device 16. For a user of the user device 16, the user device 16 performing actions in response to a pre-recorded voice (for example, any voices playing at a television or radio) may be undesirable. In another example, the non-human device 22 may generate voice commands under the control of malicious software (for example, a hacker controlling the non-human device 22 remotely), which voice commands may impersonate the user of the user device 16 or command the user device 16 to perform one or more actions without the consent of the user of the user device 16. The user device 16 may then perform one or more actions without the consent of the user. This may be undesirable for the user.

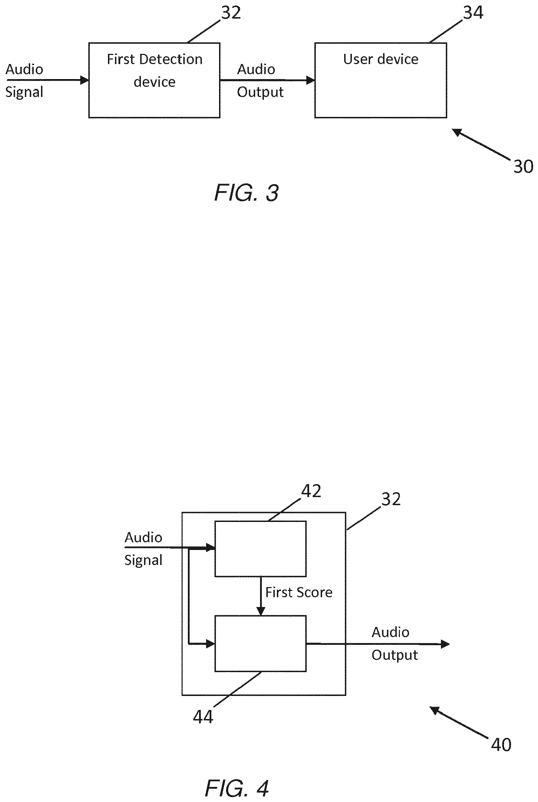

FIG. 3 is a block diagram of a system, indicated generally by the reference numeral 30, in accordance with an example embodiment. System 30 comprises a first detection device 32 and a user device 34. The first detection device 32 receives, as an input, one or more audio signals. For example, the audio signals may comprise a voice command (e.g. voice commands 14 or 24). The first detection device 32 provides an audio output. The audio output may be received by the user device 34. The generating of the audio output is discussed in further detail below.

With reference to the examples discussed in FIG. 2, the user device 16 may not have the capability of distinguishing the pre-recorded voice from a voice command from a human, and therefore the user device 16 may perform one or more actions in response to the pre-recorded voice. Further, the user device 16 may not have the capability of distinguishing the voice commands from the malicious software from a voice command from the user, and therefore the user device 16 may perform one or more actions without the consent of the user. The use of the first detection device 32 allows the user device 34 to receive an audio output from the first detection device 32, which audio output may comprise information regarding an authenticity of the voice commands. As such, the likelihood of the user device 34 performing any actions in response to pre-recorded voices, or without the consent of the user may be reduced.

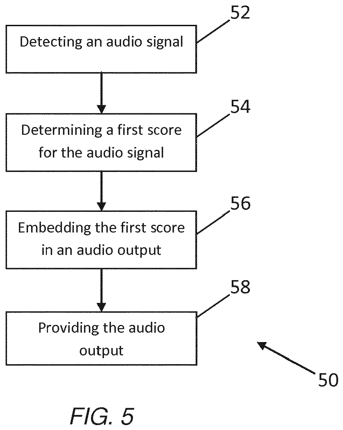

FIG. 4 is a block diagram of a system, indicated generally by the reference numeral 40, in accordance with an example embodiment. System 40 comprises the first detection device 32. The first detection device 32 may comprise a score detection module 42, and an embedding module 44. The first detection device 32 further comprises a microphone for receiving or detecting audio signals, and may comprise speakers for outputting audio outputs. It may be appreciated that one or more components of the first detection device 32 may be comprised within same or separate modules. FIG. 4 is viewed in conjunction with FIG. 5 for better understanding of the example embodiments.

FIG. 5 is a flowchart of an algorithm, indicated generally by the reference numeral 50, in accordance with an example embodiment. At operation 52, the first detection device 32 detects an audio signal (e.g. using a microphone). The audio signal comprises a voice command, either spoken by a human (e.g. user of the user device 34) or generated from a non-human device (for example the non-human device 22 generating a pre-recorded or malicious command). At operation 54, a first score is determined for the audio signal at the score detection module 42. The first score indicates an authenticity of the audio signal. For example, if the first score indicates that the audio signal is authentic, it is likely that the audio signal had been received from the user (e.g. human user) of the user device 34. At operation 56, the first score is embedded in an audio output at the embedding module 44. At operation 58, the audio output is provided (e.g. using a speaker) by the first detection device 32, for example to the user device 34.

In an example embodiment, the audio signal is received by the user device 34 at substantially the same time as the audio signal being received at the first detection device 32. For example, when a user (e.g. user 12) or non-human device (e.g. non-human device 22) provides a voice command, an audio signal comprising the voice command may be detected at microphones at the user device 34 and microphones at the first detection device 32. The first detection device 32 may provide the audio output comprising the first score as the voice command is being provided in the audio signal. For example, the provision of the audio output may start after the user or non-human device starts providing the voice command, but may continue while the user or non-human device is still providing the voice command. As such, the user device 34 may receive the audio output from the first detection device 32 and may receive the audio signal from the user or non-human device. Alternatively, or in addition, the audio output may be provided by the first detection device 32 when the user device 34 has finished receiving the audio signal comprising the voice command (e.g. after the user or non-human device has finished providing the voice command. The user device 34 determines whether or not to perform any actions in response to one or more voice commands comprised in the audio signal based on the first score received in the audio output from the first detection device.

In an example embodiment, the audio output and the audio signal may be superimposed in a transmission medium (e.g. air). For example, when the audio output is provided by the first detection device 32 and the audio signal is provided by the user or the non-human device, the audio output and the audio signal may be superimposed in air, and the superimposed audio may be received by the user device 34. The user device 34 may determine the first score from the audio output, and may determine the voice command from the audio signal.

In an example embodiment, the audio output comprises the embedded first score and at least part of the audio signal. For example, the audio output may comprise the voice command of the audio signal in addition to the embedded first score. The user device 34 may then determine the voice command from the audio output received from the first detection device 32. In an example, the first score may be embedded in the received audio signal to generate an updated audio signal. The updated audio signal is provided in the audio output and the audio output is provided (e.g. using a speaker) to the user device 34. Alternatively, or in addition, the first score may be embedded in a second audio signal, and the audio output may comprise the received audio signal and the second audio signal. The audio output may then be provided (e.g. using a speaker) to the user device 34, by providing the received audio signal and the second audio signal using the speaker. In such example embodiments, the user device 34 may not be required to receive the audio signal including the voice command directly from the user or non-human device, such that the user device 34 may receive the audio signal including the voice command indirectly through the first detection device 34. For example, if the user device 34 is not operating in a normal mode (for e.g. it is turned off or in a sleep mode) while the user or non-human device provides the voice command, the first detection device 32 may provide the audio output comprising both the audio signal (including the voice command) and the first score to the user device 34 at a later time when the user device 34 is operating normally. For example, the first detection device 32 may replay the voice command, and provide the first score to the user device 34 when the user device 34 is able to receive voice commands.

User devices that may be controlled using voice commands may comprise a variety of Internet of Things (IoT) devices, such as home appliances, vehicles, entertainment devices, wearable or non-wearable consumer devices, or the like. As such, at least some devices may not have the capability of determining whether a received voice command is authentic or not. When the user device 34 receives an audio output, as provided by the first detection device 32, the first score embedded in the audio output may assist the user device to determine whether or not the audio signal (e.g. voice command) is authentic. Therefore, the first detection device 32 is used for determining authenticity of a voice command, and is then used for providing a corresponding audio output to any device that may be controlled using voice commands.

In an example embodiment, a plurality of detection devices (similar to the first detection device 32) may be used for determining authenticity of an audio signal or audio signals originating from a same user (e.g. human user or non-human device). A plurality of scores (e.g. similar to the first score) determined by the plurality of detection devices may be used (e.g. by averaging or by a combination) for determining an authenticity of the audio signal or the authenticity of a plurality of audio signals originating from the same user.

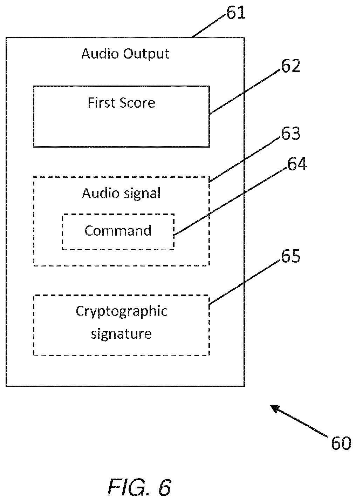

FIG. 6 is a block diagram of a system, indicated generally by the reference numeral 60, in accordance with an example embodiment. System 6o comprises an audio output 61, as provided by the first detection device 32. Audio output 61 comprises an embedded first score 62. In an example embodiment, the audio output 61 may optionally comprise at least part of an audio signal 63. The audio signal 63 may be the audio signal received and detected at operation 52 of FIG. 5. The audio signal 63 comprises a voice command, that may be used for instructing a user device to perform one or more actions. Alternatively, or in addition, the audio signal 63 may be superimposed with the audio output 61 in a transmission medium (e.g. air). In an example embodiment, the audio output 61 comprises a cryptographic signature 65. The cryptographic signature 65 may be used by a user device (such as the user device 34 to verify authenticity of the first detection device 32. The audio output 61 (or some part of the audio output 61) may be digitally signed using the cryptographic signature 65 (e.g. a private key of the first detection device 32). In one example, the audio output 61 may be digitally signed by digitally signing the first score 62 using the cryptographic signature 65. The cryptographic signature 65 may be unique to the first detection device 32, such that any device receiving the audio output 61 may authenticate a source of the audio output 61 (e.g. using a public key to verify that the audio output 61 is indeed received from the first detection device 32, and/or the audio output 61 had not been modified).

For example, when the audio output 61 is provided by the first detection device 32 to the user device 34, the user device 34 extracts the first score 62 to determine whether to perform one or more actions, as instructed in the command 64 of the audio signal 63. If the first score 62 indicates that an authenticity of the audio signal 63 is determined to be higher than a first threshold, the user device 34 performs the one or more actions corresponding to the command 64. Alternatively, if the first score 62 indicates that an authenticity of the audio signal 63 is determined to be lower than the first threshold, the user device 34 does not perform one or more actions corresponding to the command 64. In an example embodiment, the user device 34 may further extract the cryptographic signature 65 to verify the authenticity of the first detection device 32 (or any other device generating the audio output). If the cryptographic signature 65 indicates that the audio output 61 is received from an authentic source (e.g. the first detection device 32), the user device 34 may perform one or more actions corresponding to the command 64. The first threshold may be variable depending on the nature of the command (e.g. the financial cost of implementing the command).

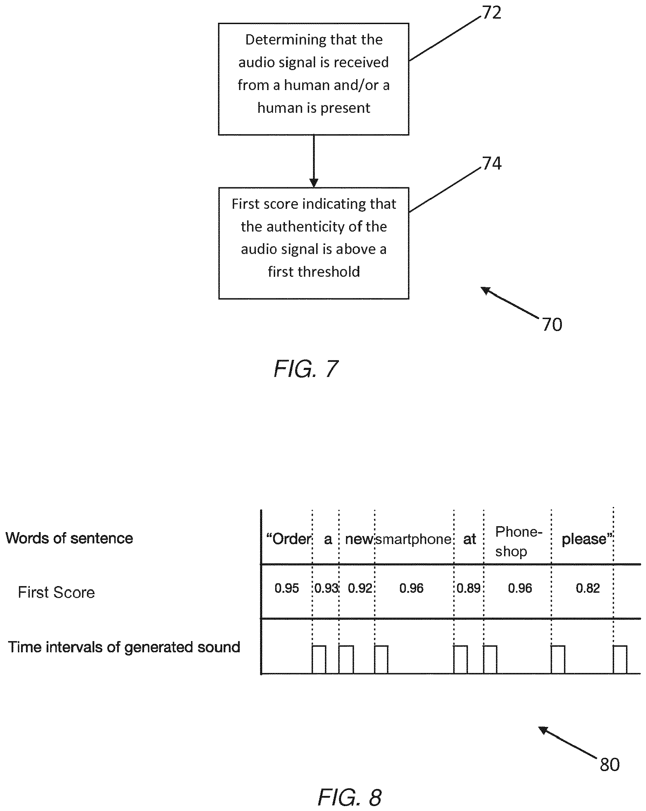

FIG. 7 is a flowchart of an algorithm, indicated generally by the reference numeral 70, in accordance with an example embodiment. Algorithm 70 shows how the first score 62 may be determined at the first detection device 32 (more specifically, at the score detection module 42). At operation 72, it is determined whether the audio signal is received from a human and/or a human is present. At operation 74, the first score 62 is generated such that the first score indicates that the authenticity of the audio signal is above a first threshold if the audio signal is determined to be received from a human and/or a presence of a human is determined. There may be a number of ways to determine whether the audio signal is received from a human, and/or whether a human is present when the audio signal is received. For example, an audio signal received from a non-human device (22) may not be considered to be authentic, even if the audio signal resembles a human voice. The audio signal may be authentic if a human, for example the user of the user device, is present, and if the audio signal is received from the human.

In an example embodiment, the authenticity may be determined to be above the first threshold if the audio signal is received from any human (directly from a human present) and not received from a machine. Alternatively, or in addition, the authenticity may be determined to be above first threshold if the audio signal is received from one or more defined users (for example, owner of the user device, family of the owner, residents of the house where the user device is used, employees of an office where the user device is used, or the like). Alternatively, or in addition, different thresholds of authenticity may be defined for different groups of humans, such that different user devices may perform different actions based on which threshold is met by the authenticity. For example, the first score indicates that the authenticity is above a first authenticity threshold when the audio signal is determined to be received from any human, and the authenticity is above a second authenticity threshold when the audio signal is determined to be received from a particular user (user A). The second authenticity threshold may be higher than the first authenticity threshold. When a user device receives the audio output, and the authenticity is above the first authenticity threshold but below the second authenticity threshold, the user device may determine to perform some actions (e.g. purchase groceries), and not to perform some actions (e.g. purchase expensive products).

FIG. 8 is an example illustration of an output (e.g. first score) of a system, the illustration indicated generally by the reference numeral 80, in accordance with an example embodiment. The illustration 80 comprises a chart of determined first score for each of a plurality of words of a spoken sentence (e.g. voice command in an audio signal.

For example, an audio signal (comprising a voice command) detected at the first detection device 32 comprises a sentence *"order a new smartphone at Phone-shop please",* and the sentence may be segmented into individual words. In an example embodiment, after the detection (52) of a word and the determining (54) of a corresponding first score, the first detection device 32 may embed (56) the first score and provide (58) an audio output comprising the embedded first score. For example, a respective audio output for each respective word may be provided, such that there is a first time interval (e.g. 200 milliseconds, or within the range of 100 to 500 milliseconds) between each respective audio output. The first time interval may be predefined. Alternatively, or in addition, the first score may be generated for a group of words (e.g. phrases, sentences). As such, each audio output may correspond to each respective group of words (rather than a single word).

In an example embodiment, the embedded first score is in an inaudible frequency range. For example, the first score may be embedded by generating a single frequency tone where the frequency is based, at least in part, on the first score (e.g. proportional to the first score). The generated frequency tone may be embedded in the audio output. For instance, a first score "s" may be a number between 0 (e.g. low authenticity) and 1 (e.g. high authenticity), and a frequency of the embedded first score may be determined as a function of the first score. For example, the frequency of a frequency tone corresponding to the embedded first score may be calculated as *fo*+ *s*fw,* where *fo* is an offset frequency and *fw* is a frequency span. In an example, a value of *fo* may be selected to be in the inaudible frequency range (e.g. 20 kHz), and the value of *fw* (frequency span) may be approximately 5 kHz. The frequency tone corresponding to the embedded first score may be played during the first time interval between each word or each group of words. A first score of 0 may correspond to a frequency tone of 20kHz, and a first score of 1 may correspond to a frequency tone of 25kHz. In the example shown in FIG. 8, the first score is calculated as 0.95, 0.93, 0.92, 0.96, 0.89, 0.96, and 0.82 respectively for the words "order", "a", "new", "smartphone", "at", "Phone-shop", and "please" respectively. It may be determined that the authenticity of the audio signal (comprising the voice command to order the new smartphone) is above the first threshold, as the respective first scores for the words of the audio signal are closer to 1.

In an example embodiment, the embedded first score is in an audible frequency range. For example, a frequency tone corresponding to the embedded first score may be audible, but may also be unnoticeable or hard to hear. For example, with reference to FIG. 6, the embedding of the first score 62 is performed such that the frequency tone is at a low volume compared to the audio signal 63 of the audio output 61 (for example, using spread spectrum communications techniques). The embedded first score may therefore be perceived as a background noise (with low volume) when the audio output is heard or detected.

The first score may be determined using one or more sensors, such that data from the sensors may be used for determining whether the authenticity of the audio signal is above or below a first threshold. As discussed earlier, the authenticity of the audio signal may be determined to be above a first threshold if the audio signal is determined to be received from a human and/or a presence of a human is determined.

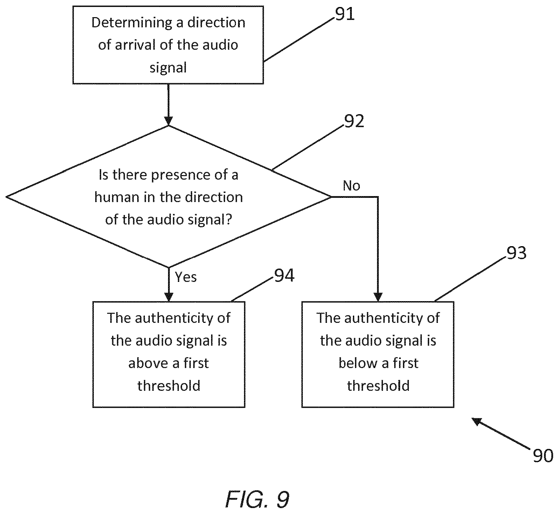

FIG. 9 is a flowchart of an algorithm, indicated generally by the reference numeral 90, in accordance with an example embodiment. The operations of the algorithm 90 may be performed in order to determine the authenticity of an audio signal. At operation 91, a direction of arrival of an audio signal is determined. For example, when audio signal is detected (52), the direction from which the audio signal is received may be determined using one or more sensors (e.g. an array of microphones). An array of microphones may be used for estimation of an angle of arrival of the audio signal. At operation 92, it is determined whether there is presence of a human in the determined direction of arrival of the audio signal. If it is determined that there is presence of a human, the authenticity of the audio signal may be determined to be above a first threshold in operation 94. If it is determined that a human is/was not present in the direction of arrival of the audio signal when the audio signal was received, the authenticity of the audio signal may be determined to be below the first threshold in operation 93.

For example, one or more images may be obtained (e.g. using a camera), and the images may be used for determining whether there is a human present in the direction of arrival of the audio signal. In an example embodiment, face recognition techniques may be used on the images for determining whether a specific user (e.g. owner of user device, owner's family, etc.) was present in the direction of arrival of the audio signal. For example, the authenticity of the audio signal may be determined to be higher than the first threshold in operation 94 if the owner of the user device was present in the direction of arrival of the audio signal, as this may show that the audio signal is received from the owner of the user device. Alternatively, or in addition, the presence of a human may be determined based on other sensor data received from sensors such as radars, infrared sensors, temperature sensors, motion sensors, time-of-flight sensors, proximity sensors (e.g. time-of-flight based proximity sensors), or other sensors that may determine the presence of a human.

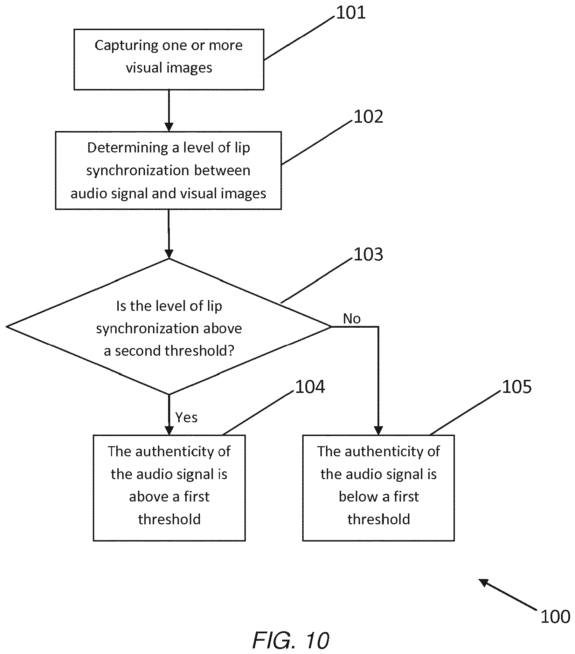

FIG. 10 is a flowchart of an algorithm, indicated generally by the reference numeral 100, in accordance with an example embodiment. The operations of the algorithm 100 may be performed in order to determine the authenticity of an audio signal. At operation 101, one or more visual images may be obtained. For example, the first detection device 32 may comprise one or more cameras to obtain one or more visual images. At operation 102, a level of lip synchronization between the audio signal and the visual images may be determined. For example, when an audio signal is being received and detected at the first detection device 32, a video of a human providing the audio signal (e.g. voice command) may be captured, such that lip movements of the human may be determined with reference to the audio signal. The lip movements may be matched with the audio signal in order to determine a level of lip synchronization. If it is determined, at operation 103, that the level of lip synchronization is above a second threshold, the authenticity of the audio signal is determined to be above the first threshold at operation 104. If the level of lip synchronization is determined to be below the second threshold at operation 103, the authenticity of the audio signal is determined to be below the first threshold at operation 105.

In an example embodiment, face recognition techniques may be used on the video of the human providing the audio signal (e.g. voice command) for determining whether the audio signal is being received from a defined user (e.g. owner of user device, owner's family, etc.). For example, the authenticity of the audio signal may be determined to be higher than the first threshold in operation 104 if the level of lip synchronization is above the second threshold and the audio signal is received from the defined user.

In an example embodiment, the authenticity of the audio signal is determined based, at least in part, on both the direction of arrival of the audio signal (as described in FIG. 9), and the level of lip synchronization (as described in FIG. 10). For example, the authenticity may be determined to be above the first threshold if a human (optionally a defined user) is present at the direction of arrival of the audio signal, and if the level of lip synchronization is determined to be above a second threshold. Alternatively, or in addition, the authenticity of the audio signal may be determined based on at least one of the direction of arrival of the audio signal and the level of lip synchronization. Therefore, the authenticity of the audio signal may be determined to be above the first threshold if a human is present at the direction of arrival or if the lip synchronization is determined to be above a second threshold.

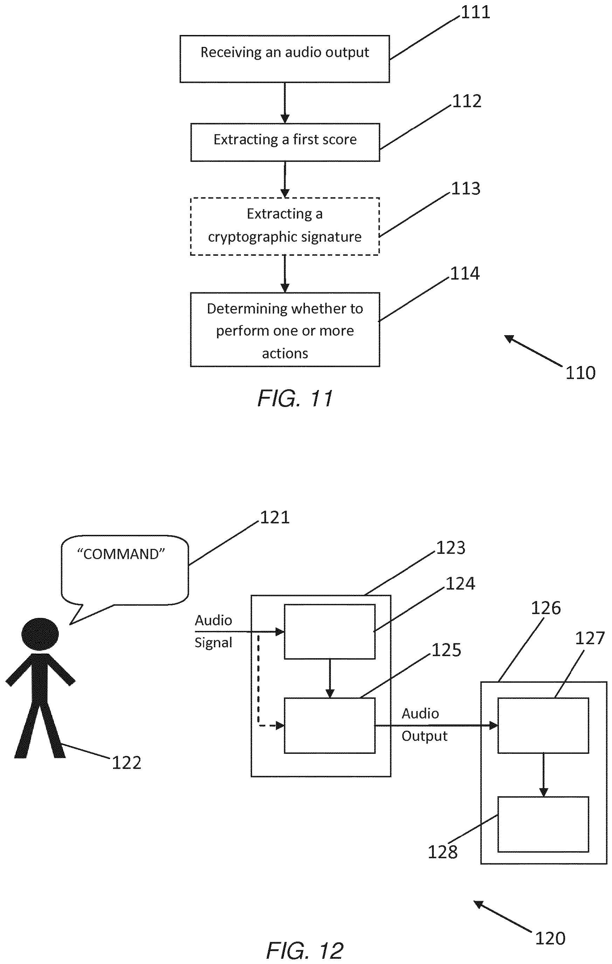

In accordance with an example embodiment, with reference to FIG. 3 as discussed above, the audio output provided by the first detection device 32 may be received at the user device 34. FIG. 11 is a flowchart of an algorithm, indicated generally by the reference numeral 110, in accordance with an example embodiment. The operations of the algorithm 110 may be performed at the user device 34. At operation 111, an audio output is received at the user device 34. The audio output may be similar to the audio output 61 (see FIG. 6) as provided by the first detection device 32. At operation 112, a first score (e.g. an embedded first score) is extracted from the audio output. At operation 114, the user device 34 may determine whether to perform one or more actions in response to one or more commands (e.g. voice commands) based, at least in part, on the first score. The user device 34 may optionally extract a cryptographic signature from the received audio output at operation 113 before determining whether to perform the one or more actions. For example, the received audio output may be signed with the cryptographic signature (e.g. a private key of the first detection device 32), such that the user device 34 may verify (e.g. using a public key of the first detection device 32) whether a source of the received audio output is authentic (e.g. by verifying that the audio output is indeed received from the first detection device 32, and/or the audio output had not been modified).

In an example embodiment, one or more of the operations 112 to 114 of FIG. 11 may be performed at a remote server that may be in communication with the user device 34. For example, when the user device 34 receives the audio output at operation 111, the user device 34 may send the audio output to a remote server (e.g. a cloud server), such that the remote server may extract (112) the first score, optionally extract (113) the cryptographic signature, and determine (114) whether the user device 34 should perform one or more actions based on the first score. Alternatively, or in addition, only operation 112 is performed at the remote server, such that the remote server may extract (112) the first score and send the information of the extracted first score to the user device 34. The user device 34 may then determine (114) whether to perform one or more actions based on the extracted first score.

In an example embodiment, the received audio output (e.g. comprising a sentence *"Order a new smartphone at Phone-shop please"*)*,* may be fragmented into a plurality of fragments (e.g. audible and inaudible fragments). One or more filters may be applied to the fragments in order to separate the audio signal and the first score embedded within the received audio output. For example, at operation 112, the first score may be extracted by applying a Fourier transformation to one or more inaudible fragments and by determining the frequency of a frequency tone corresponding to the inaudible fragments. The first score may then be determined as a function of the determined frequency. For example, the first score (*s*') may be calculated at the user device 34 using as *s'* = *(fd - fo)*/ *fw,* where fd is the determined frequency, *fo* is an offset frequency, and *fw* is a frequency span. The offset frequency (e.g. 20kHz) and the frequency span (e.g. 5kHz) may be known values.

In an example embodiment, the user device 34 determines to perform one or more actions in response to one or more voice commands (e.g. one or more voice commands comprised in a received audio signal) if the extracted first score (s') indicates that the authenticity of the audio signal is above a first threshold. For example, if the authenticity of the voice command *"Order a new smartphone at Phone-shop please"* is above the first threshold, the user device 34 may perform actions for purchasing a smartphone from the Phone-shop (e.g. an online phone purchasing website). In another example, if the extracted first score indicates that the authenticity of the voice command is below the first threshold, the user device 34 may not perform actions for purchasing the smartphone. Additionally, the user device 34 may send an alert or notification to inform a user that a voice command with authenticity below the first threshold has been received.

In an example embodiment, as discussed above with reference to FIG. 7, different thresholds of authenticity may be defined for different groups of humans, such that the user device 34 may perform different actions based on which threshold is met by the authenticity. For example, the authenticity may be above a first authenticity threshold when the audio signal is received from any human, and the authenticity may be above a second authenticity threshold when the audio signal is received from a defined user (e.g. owner of the user device 34). The second authenticity threshold may be higher than the first authenticity threshold. When the user device 34 receives the audio output, and the authenticity is above the first authenticity threshold but below the second authenticity threshold, the user device 34 may determine to perform some actions (e.g. purchase groceries), and not to perform some actions (e.g. purchase expensive products). As such, in the example provided above regarding the voice command *"Order a new smartphone at Phone-shop please",* the user device 34 may only purchase the smartphone (which may be an expensive product) if the first score indicates that the authenticity is above the second authenticity threshold (e.g. the voice command is received from the defined user).

It may be appreciated that one or more authenticity thresholds or combinations of authenticity thresholds may be defined, such that the user device 34 may determine to perform actions based on the one or more authenticity thresholds met by the voice commands, as indicated by the extracted first score.

In an example embodiment, the user device 34 may extract the cryptographic signature 65 at operation 113 to verify the authenticity of the first detection device 32 (or any other device generating the audio output). If the cryptographic signature 65 indicates that the first detection device 32 is authentic, the user device 34 may perform one or more actions corresponding to the voice command (64). If the cryptographic signature 65 indicates that the first detection device 32 is not authentic, or if a cryptographic signature is not present in the received audio output, the user device 34 may not perform one or more actions corresponding to the voice command (64).

FIG. 12 is a block diagram of a system, indicated generally by the reference numeral 120, in accordance with an example embodiment. System 120 comprises a user 122, a first detection device 123 (similar to the first detection device 32), and a user device 126 (similar to the user device 34). The user device 126 may be a voice controllable device that may perform one or more actions in response to voice commands. As discussed earlier, the first detection device 123 may comprise a score detection module 124 and an embedding module 125. The user device 126 may comprise a score extraction module 127 and a processing module 128. The user 122 may speak out a voice command, and an audio signal 121 comprising the voice command may be detected at the first detection device 123. Alternatively, the voice command may also be received from a non-human machine. The audio signal 121 may also be received at the user device 126. A first score is determined for one or more words of the voice commands at the score detection module 124. The first score is embedded in an audio output, and the audio output comprising the first score is provided to the user device 126. The audio signal may optionally be provided to the embedding module 125, and the audio output may optionally comprise the audio signal in addition to the embedded first score. The score extraction module 127 extracts the first score from the received audio output. The processing module 128 determines whether or not one or more actions should be performed in response to the voice command in the received audio signal 121 based, at least in part, on the extracted first score.

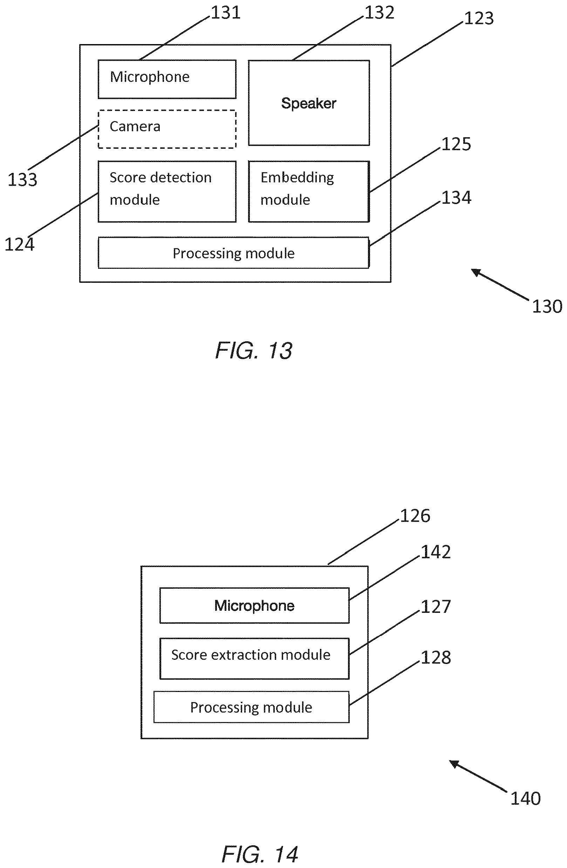

FIG. 13 is a block diagram of a system, indicated generally by the reference numeral 130, in accordance with an example embodiment. The system 130 shows example components of the first detection device 123. The first detection device 123 may comprise at least one microphone 131 (e.g. for detecting an audio signal and/or for determining a direction of arrival of an audio signal (e.g. using a microphone array)), at least one speaker 132 (e.g. for providing the audio output), at least one camera 133 (e.g. for determining presence of a human, for determining lip synchronization level, for face recognition, etc.), at least one score detection module (e.g. for determining the first score indicating authenticity of the audio signal), at least one embedding module 125 (e.g. for embedding the first score and/or a cryptographic signature in the audio output), and at least one processing module 134 (e.g. for executing one or more program instructions).

FIG. 14 is a block diagram of a system, indicated generally by the reference numeral 140, in accordance with an example embodiment. The system 140 shows example components of the user device 126 as described above with reference to FIG. 12. The user device 126 may comprise at least one microphone 142 (e.g. for receiving the audio output and/or the audio signal), at least one score extraction module 127 (e.g. for extracting the first score and/or the cryptographic signature), and at least one processing module 128 (e.g. for executing one or more program instructions for performing one or more actions in response to the one or more voice commands).

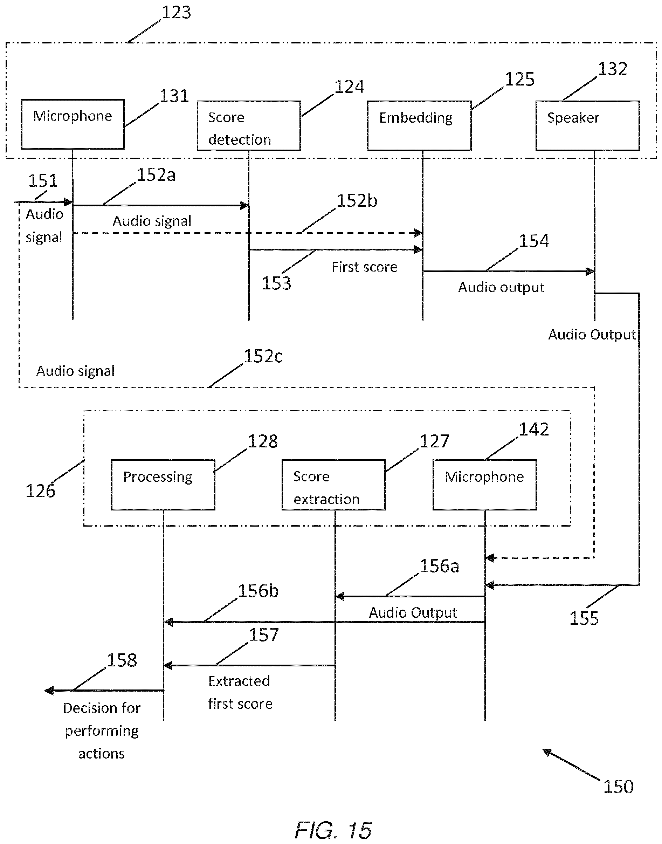

FIG.15 is a sequence diagram illustrating an algorithm, indicated generally by the reference numeral 150, in accordance with an example embodiment. The operations of the algorithm may be performed at a system, wherein the system may comprise the first detection device 123 and the user device 126. An audio signal is received and detected at the microphone(s) 131 at operation 151. The audio signal may be provided to the score detection module 124 at operation 152a. The audio signal may optionally be provided to the embedding module 125 at operation 152b and to the microphone(s) 142 of the user device 126 at operation 152c. The score detection module may determine a first score at operation 153 and provide the first score to the embedding module 125. The score detection module may use information regarding direction of arrival of the audio signal provided at operation 152a (received from the microphone 131) or visual images (related to presence of a human, face recognition, or lip synchronization level) received from one or more cameras. The embedding module 125 may embed the first score in an audio output, which audio output comprises the embedded first score. The audio output may optionally comprise the audio signal as received at operation 152b. At operation 154, the audio output may be provided to the speaker 132, and may be output at the speaker 132. At operation 155, the audio output is received at the user device 126 from the first detection device 123. The audio output may be detected at the microphone(s) 142 of the receiver 126. The audio output may be provided to the score extraction module 127 at operation 156a, and may be provided to the processing module 128 at operation 156b. The score extraction module 127 may extract a first score from the audio output, and provide the extracted first score to the processing module 128 at operation 157. The processing module 128 may make a decision at operation 158 for determining whether to perform one or more actions in response to one or more voice commands comprised in the audio signal (as received at operation 152c, or received with the audio output at operation 155) based on the extracted first score. If a decision is made to perform one or more actions in response to the one or more voice commands, the processing module 128 may cause performance of one or more actions based on the one or more voice commands.

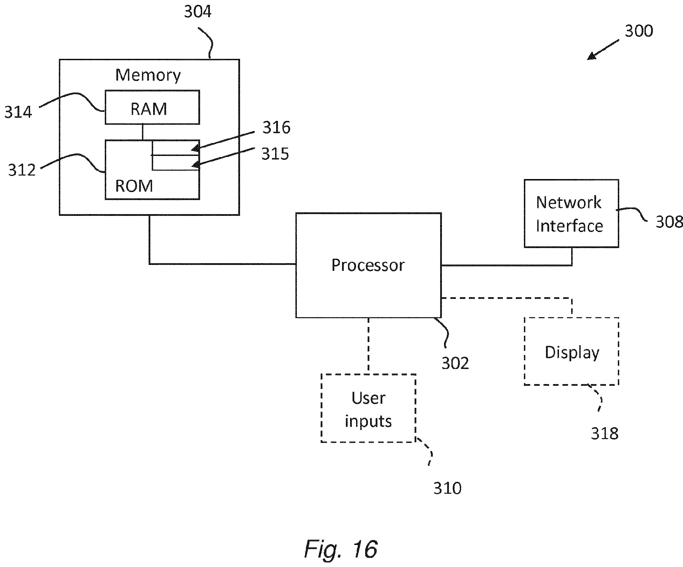

For completeness, FIG. 16 is a schematic diagram of components of one or more of the modules for implementing the algorithms described above, which hereafter are referred to generically as processing systems 300. A processing system 300 may have a processor 302, a memory 304 coupled to the processor and comprised of a RAM 314 and ROM 312, and, optionally, viewer inputs 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor, implements aspects of the algorithms 50, 70, 90, 100, 110, and 150.

The processor 302 may take any suitable form. For instance, it may be a microcontroller, plural microcontrollers, a processor, or plural processors. Processor 302 may comprise processor circuitry.

The processing system 300 may be a standalone computer, a server, a console, or a network thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

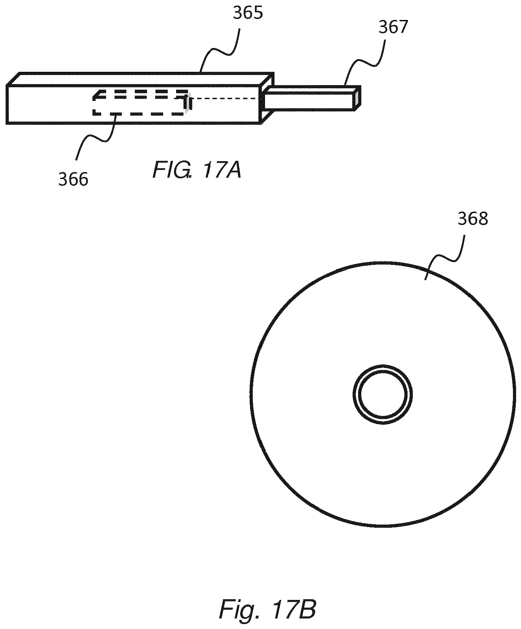

FIG. 17A and FIG. 17B show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus (32, 123) comprising:
means for receiving (52) at a microphone an audio signal comprising one or more voice commands;
means for determining (54) a first score for the received audio signal, wherein the first score indicates an authenticity of the audio signal;
means for embedding (56) the first score in an audio output; and
means for providing (58) the audio output for output at a speaker.

2. An apparatus as claimed in claim 1, wherein the audio output comprises the embedded first score and at least part of the audio signal.

3. An apparatus as claimed in claim 1, wherein the first score indicates (74) that the authenticity of the audio signal is above a first threshold if the audio signal is determined (72) to be received from a human and/or a presence of a human is determined by the means for determining the first score.

4. An apparatus as claimed in any one of the preceding claims, further comprising:
means for determining (91) a direction of arrival of the audio signal;
means for determining (92) whether there is presence of a human in the direction of arrival of the audio signal;
wherein the first score indicates (94) that the authenticity of the audio signal is above the first threshold if the presence of a human in the direction of arrival of the audio signal is determined.

5. An apparatus as claimed in any one of the preceding claims, further comprising means for capturing (101) one or more visual images.

6. An apparatus as claimed in claim 5, wherein the first score is determined based, at least in part, on the one or more visual images.

7. An apparatus as claimed in any one of claims 5 to 6, further comprising:
means for determining (102) a level of lip synchronization based on synchronization between the one or more visual images and the audio signal; wherein the first score indicates (104) that the authenticity of the audio signal is above the first threshold if the level of lip synchronization is above a second threshold.

8. An apparatus as claimed in any one of the preceding claims, wherein the audio signal comprises one or more voice commands to be provided to one or more user devices.

9. An apparatus as claimed in any one of the preceding claims, further comprising means for embedding a cryptographic signature in the audio output, wherein the cryptographic signature indicates an authenticity of the apparatus.

10. An apparatus (34, 126) comprising:
means for receiving (111) an audio output from an apparatus according to any preceding claim providing a first detection device;
means for extracting (112) a first score from the received audio output, wherein the first score indicates an authenticity of an audio signal comprising one or more voice commands;
means for receiving at least part of the audio signal comprising one or more voice commands; and
means for determining (114) whether to perform one or more actions in response to the one or more voice commands based, at least in part, on the first score.

11. An apparatus as claimed in any one of the preceding claims, wherein the means comprise:
at least one processor; and
at least one memory including computer program code, the at least one memory and the computer program configured, with the at least one processor, to cause the performance of the apparatus.

12. A system (30, 150) comprising a first detection device and a user device, wherein:
the first detection device (32, 123) is configured to:
receive (52) at a microphone an audio signal comprising one or more voice commands;
determine (54) a first score for the received audio signal, wherein the first score indicates an authenticity of the audio signal;
embed (56) the first score in an audio output; and
provide (58) the audio output for output at a speaker; and
the user device (34, 126) is configured to:
receive (111) the audio output from the first detection device;
extract (112) the first score from the received audio output;
receive at least part of the audio signal comprising the one or more voice commands; and
determine (114) whether to perform one or more actions in response to one or more voice commands based, at least in part, on the first score.

13. A method comprising:
receiving (52), at a microphone, an audio signal comprising one or more voice commands;
determining (54) a first score for the received audio signal, wherein the first score indicates an authenticity of the audio signal;
embedding (56) the first score in an audio output; and
providing (58) the audio output for output at a speaker.

14. A method comprising:
receiving (111) an audio output from an apparatus according to any of claims 1 to 9 providing a first detection device;
extracting (112) a first score from the received audio output, wherein the first score indicates an authenticity of an audio signal comprising one or more voice commands;
receiving at least part of the audio signal comprising the one or more voice commands; and
determining (114) whether to perform one or more actions in response to one or more voice commands based, at least in part, on the first score.

15. A computer program comprising instructions for causing an apparatus to perform at least the following:
receiving, at a microphone, (52) an audio signal comprising one or more voice commands;
determining (54) a first score for the received audio signal, wherein the first score indicates an authenticity of the audio signal;
embedding (56) the first score in an audio output; and
providing (58) the audio output for output at a speaker.

## Patentansprüche

1. Einrichtung (32, 123), die Folgendes umfasst:
Mittel zum Empfangen (52) eines Audiosignals, das einen oder mehrere Sprachbefehle umfasst, an einem Mikrofon;
Mittel zum Bestimmen (54) einer ersten Bewertung für das empfangene Audiosignal, wobei die erste Bewertung eine Authentizität des Audiosignals anzeigt;
Mittel zum Einbetten (56) der ersten Bewertung in eine Audioausgabe; und
Mittel zum Bereitstellen (58) der Audioausgabe zur Ausgabe an einem Lautsprecher.

2. Einrichtung nach Anspruch 1, wobei die Audioausgabe die eingebettete erste Bewertung und mindestens einen Teil des Audiosignals umfasst.

3. Einrichtung nach Anspruch 1, wobei die erste Bewertung anzeigt (74), dass die Authentizität des Audiosignals über einem ersten Schwellwert liegt, wenn bestimmt (72) wird, dass das Audiosignal von einem Menschen empfangen wurde, und/oder ein Vorhandensein eines Menschen durch die Mittel zum Bestimmen der ersten Bewertung bestimmt wird.

4. Einrichtung nach einem der vorhergehenden Ansprüche, die ferner Folgendes umfasst:
Mittel zum Bestimmen (91) einer Ankunftsrichtung des Audiosignals;
Mittel zum Bestimmen (92), ob in der Ankunftsrichtung des Audiosignals ein Mensch vorhanden ist;
wobei die erste Bewertung anzeigt (94), dass die Authentizität des Audiosignals über dem ersten Schwellwert liegt, wenn das Vorhandensein eines Menschen in der Ankunftsrichtung des Audiosignals bestimmt wird.

5. Einrichtung nach einem der vorhergehenden Ansprüche, die ferner Mittel zum Erfassen (101) von einem oder mehreren visuellen Bildern umfasst.

6. Einrichtung nach Anspruch 5, wobei die erste Bewertung mindestens teilweise auf Basis des einen oder der mehreren visuellen Bilder bestimmt wird.

7. Einrichtung nach einem der Ansprüche 5 bis 6, die ferner Folgendes umfasst:
Mittel zum Bestimmen (102) eines Maßes der Lippensynchronisation auf Basis einer Synchronisation zwischen dem einen oder den mehreren visuellen Bildern und dem Audiosignal; wobei die erste Bewertung anzeigt (104), dass die Authentizität des Audiosignals über dem ersten Schwellwert liegt, wenn das Maß der Lippensynchronisation über einem zweiten Schwellwert liegt.

8. Einrichtung nach einem der vorhergehenden Ansprüche, wobei das Audiosignal ein oder mehrere Sprachbefehle umfasst, die einer oder mehreren Benutzervorrichtungen bereitzustellen sind.

9. Einrichtung nach einem der vorhergehenden Ansprüche, die ferner Mittel zum Einbetten einer kryptographischen Signatur in die Audioausgabe umfasst, wobei die kryptographische Signatur eine Authentizität der Einrichtung anzeigt.

10. Einrichtung (34, 126), die Folgendes umfasst:
Mittel zum Empfangen (111) einer Audioausgabe von einer Einrichtung gemäß einem der vorhergehenden Ansprüche, die eine erste Detektionsvorrichtung bereitstellt;
Mittel zum Extrahieren (112) einer ersten Bewertung von der empfangenen Audioausgabe, wobei die erste Bewertung eine Authentizität eines Audiosignals anzeigt, das ein oder mehrere Sprachbefehle umfasst;
Mittel zum Empfangen von mindestens einem Teil des Audiosignals, das einen oder mehrere Sprachbefehle umfasst; und
Mittel zum Bestimmen (114) in Reaktion auf den einen oder die mehreren Sprachbefehle, ob mindestens teilweise auf Basis der ersten Bewertung eine oder mehrere Aktionen durchzuführen sind.

11. Einrichtung nach einem der vorhergehenden Ansprüche, wobei die Mittel Folgendes umfassen:
mindestens einen Prozessor; und
mindestens einen Speicher, der einen Computerprogrammcode beinhaltet, wobei der mindestens eine Speicher und das Computerprogramm dazu ausgelegt sind, mit dem mindestens einen Prozessor die Durchführung der Einrichtung zu veranlassen.

12. System (30, 150), das eine erste Detektionsvorrichtung und eine Benutzervorrichtung umfasst, wobei:
die erste Detektionsvorrichtung (32, 123) zu Folgendem ausgelegt ist:
Empfangen (52) eines Audiosignals, das einen oder mehrere Sprachbefehle umfasst, an einem Mikrofon;
Bestimmen (54) einer ersten Bewertung für das empfangene Audiosignal, wobei die erste Bewertung eine Authentizität des Audiosignals anzeigt;
Einbetten (56) der ersten Bewertung in eine Audioausgabe; und
Bereitstellen (58) der Audioausgabe zur Ausgabe an einem Lautsprecher; und
die Benutzervorrichtung (34, 126) zu Folgendem ausgelegt ist:
Empfangen (111) der Audioausgabe von der ersten Detektionsvorrichtung;
Extrahieren (112) der ersten Bewertung aus der empfangenen Audioausgabe;
Empfangen von mindestens einem Teil des Audiosignals, das den einen oder die mehreren Sprachbefehle umfasst; und
Bestimmen (114) in Reaktion auf einen oder mehrere Sprachbefehle, ob mindestens teilweise auf Basis der ersten Bewertung eine oder mehrere Aktionen durchzuführen sind.

13. Verfahren, das Folgendes umfasst:
Empfangen (52) eines Audiosignals, das einen oder mehrere Sprachbefehle umfasst, an einem Mikrofon;
Bestimmen (54) einer ersten Bewertung für das empfangene Audiosignal, wobei die erste Bewertung eine Authentizität des Audiosignals anzeigt;
Einbetten (56) der ersten Bewertung in eine Audioausgabe; und
Bereitstellen (58) der Audioausgabe zur Ausgabe an einem Lautsprecher.

14. Verfahren, das Folgendes umfasst:
Empfangen (111) einer Audioausgabe von einer Einrichtung gemäß einem der Ansprüche 1 bis 9, die eine erste Detektionsvorrichtung bereitstellt;
Extrahieren (112) einer ersten Bewertung von der empfangenen Audioausgabe, wobei die erste Bewertung eine Authentizität eines Audiosignals anzeigt, das ein oder mehrere Sprachbefehle umfasst;
Empfangen von mindestens einem Teil des Audiosignals, das den einen oder die mehreren Sprachbefehle umfasst; und
Bestimmen (114) in Reaktion auf einen oder mehrere Sprachbefehle, ob mindestens teilweise auf Basis der ersten Bewertung eine oder mehrere Aktionen durchzuführen sind.

15. Computerprogramm, das Anweisungen zum Veranlassen einer Einrichtung, mindestens Folgendes durchzuführen, umfasst:
Empfangen (52) eines Audiosignals, das einen oder mehrere Sprachbefehle umfasst, an einem Mikrofon;
Bestimmen (54) einer ersten Bewertung für das empfangene Audiosignal, wobei die erste Bewertung eine Authentizität des Audiosignals anzeigt;
Einbetten (56) der ersten Bewertung in eine Audioausgabe; und
Bereitstellen (58) der Audioausgabe zur Ausgabe an einem Lautsprecher.

## Revendications

1. Appareil (32, 123) comprenant :
des moyens pour recevoir (52), au niveau d'un microphone, un signal audio comprenant une ou plusieurs commandes vocales ;
des moyens pour déterminer (54) un premier score pour le signal audio reçu, dans lequel le premier score indique l'authenticité du signal audio ;
des moyens pour intégrer (56) le premier score dans une sortie audio ; et
des moyens pour fournir (58) la sortie audio pour la sortie sur un haut-parleur.

2. Appareil selon la revendication 1, dans lequel la sortie audio comprend le premier score intégré et au moins une partie du signal audio.

3. Appareil selon la revendication 1, dans lequel le premier score indique (74) que l'authenticité du signal audio est supérieure à un premier seuil si le signal audio est déterminé (72) comme étant reçu d'un être humain et/ou si la présence d'un être humain est déterminée par les moyens pour déterminer le premier score.

4. Appareil selon l'une quelconque des revendications précédentes, comprenant en outre :
des moyens pour déterminer (91) une direction d'arrivée du signal audio ;
des moyens pour déterminer (92) si un être humain est présent dans la direction d'arrivée du signal audio ;
dans lequel le premier score indique (94) que l'authenticité du signal audio est supérieure au premier seuil s'il est déterminé qu'un être humain est présent dans la direction d'arrivée du signal audio.

5. Appareil selon l'une quelconque des revendications précédentes, comprenant en outre des moyens pour capturer (101) une ou plusieurs images visuelles.

6. Appareil selon la revendication 5, dans lequel le premier score est déterminé en se basant au moins en partie sur les une ou plusieurs images visuelles.

7. Appareil selon l'une quelconque des revendications 5 et 6, comprenant en outre :
des moyens pour déterminer (102) un niveau de synchronisation labiale sur la base de la synchronisation entre les une ou plusieurs images visuelles et le signal audio ; dans lequel le premier score indique (104) que l'authenticité du signal audio est supérieure au premier seuil si le niveau de synchronisation labiale est supérieur à un deuxième seuil.

8. Appareil selon l'une quelconque des revendications précédentes, dans lequel le signal audio comprend une ou plusieurs commandes vocales à fournir à un ou plusieurs dispositifs utilisateurs.

9. Appareil selon l'une quelconque des revendications précédentes, comprenant en outre des moyens pour intégrer une signature cryptographique dans la sortie audio, dans lequel la signature cryptographique indique l'authenticité de l'appareil.

10. Appareil (34, 126) comprenant :
des moyens pour recevoir (111) une sortie audio d'un appareil selon l'une des revendications précédentes, fournissant un premier dispositif de détection ;
des moyens pour extraire (112) un premier score de la sortie audio reçue, dans lequel le premier score indique l'authenticité d'un signal audio comprenant une ou plusieurs commandes vocales ;
des moyens pour recevoir au moins une partie du signal audio comprenant une ou plusieurs commandes vocales ; et
des moyens pour déterminer (114) s'il faut effectuer une ou plusieurs actions en réponse aux une ou plusieurs commandes vocales en se basant au moins en partie sur le premier score.

11. Appareil selon l'une quelconque des revendications précédentes, dans lequel les moyens comprennent :
au moins un processeur ; et
au moins une mémoire comportant un code de programme informatique, l'au moins une mémoire et le programme informatique étant configurés, avec l'au moins un processeur, pour provoquer la performance de l'appareil.

12. Système (30,150) comprenant un premier dispositif de détection et un dispositif utilisateur, dans lequel :
le premier dispositif de détection (32, 123) est configuré pour :
recevoir (52), au niveau d'un microphone, un signal audio comprenant une ou plusieurs commandes vocales ;
déterminer (54) un premier score pour le signal audio reçu, dans lequel le premier score indique l'authenticité du signal audio ;
intégrer (56) le premier score dans une sortie audio ; et
fournir (58) la sortie audio pour la sortie sur un haut-parleur ; et
le dispositif utilisateur (34, 126) est configuré pour :
recevoir (111) la sortie audio du premier dispositif de détection ;
extraire (112) le premier score de la sortie audio reçue ;
recevoir au moins une partie du signal audio comprenant les une ou plusieurs commandes vocales ; et
déterminer (114) s'il faut effectuer une ou plusieurs actions en réponse à une ou plusieurs commandes vocales en se basant au moins en partie sur le premier score.

13. Procédé comprenant les étapes suivantes :
recevoir (52), au niveau d'un microphone, un signal audio comprenant une ou plusieurs commandes vocales ;
déterminer (54) un premier score pour le signal audio reçu, dans lequel le premier score indique l'authenticité du signal audio ;
intégrer (56) le premier score dans une sortie audio ; et fournir (58) la sortie audio pour la sortie sur un haut-parleur.

14. Procédé comprenant :
recevoir (111) une sortie audio d'un appareil selon l'une des revendications 1 à 9, fournissant un premier dispositif de détection ;
extraire (112) un premier score de la sortie audio reçue, dans lequel le premier score indique l'authenticité d'un signal audio comprenant une ou plusieurs commandes vocales ;
recevoir au moins une partie du signal audio comprenant les une ou plusieurs commandes vocales ; et
déterminer (114) s'il faut effectuer une ou plusieurs actions en réponse à une ou plusieurs commandes vocales en se basant au moins en partie sur le premier score.

15. Programme informatique comprenant des instructions pour amener un appareil à effectuer au moins les opérations suivantes :
recevoir (52), au niveau d'un microphone, un signal audio comprenant une ou plusieurs commandes vocales ;
déterminer (54) un premier score pour le signal audio reçu, dans lequel le premier score indique l'authenticité du signal audio ;
intégrer (56) le premier score dans une sortie audio ; et
fournir (58) la sortie audio pour la sortie sur un haut-parleur.
